# EUROPÄISCHE PATENTSCHRIFT

(11) **EP 2 052 969 B1**
(45) Veröffentlichungstag und Bekanntmachung des Hinweises auf die Patenterteilung: **28.07.2010**
(21) Anmeldenummer: 09000709.7
(22) Anmeldetag: 27.05.2004
(51) Int. Cl.: B64D 9/00, B64C 1/20, B60P 7/08

(54) **Vorrichtung zur Aufnahme von Zurrvorrichtungen für ein Frachtladesystem eines Transportmittels, insbesondere eines Flugzeuges**
Device for containing lashing ring devices for a freight loading system of a transported good, in particular an airplane
Dispositif de réception de dispositifs d'amarrage pour un système de chargement de fret d'un moyen de transport, notamment d'un avion

(30) Priorität: 30.05.2003 DE 10324648
(43) Veröffentlichungstag der Anmeldung: 29.04.2009
(62) Teilanmeldung aus: 04012591.6
(73) Patentinhaber: Airbus Deutschland GmbH, 21129 Hamburg (DE)
(72) Erfinder: Bruns, Johannes, 26169 Gehlenberg (DE)
(74) Vertreter: Klöpper, Ute

(56) Entgegenhaltungen:
- EP-A- 0 881 144
- EP-A- 0 894 713
- FR-A- 2 745 260

## Beschreibung

Die Erfindung betrifft eine Vorrichtung zur Aufnahme von Zurrvorrichtungen für ein Frachtladesystem eines Transportmittels, insbesondere eines Flugzeuges, wobei mindestens eine Zurrvorrichtung zum Verzurren oder Aufnehmen von Lasten oder Gütern umfasst ist.

Transportmittel wie Flugzeuge werden sowohl zum Befördern von Fracht als auch zum Befördern von Passagieren verwendet. Ein und dieselbe Maschine kann zum Beispiel tags zur Passagier- und nachts zur Frachtbeförderung genutzt werden. Neben dem Transfer und der Verriegelung bzw. Verzurrung von Frachtgütern muss in einem solchen Fall das Frachtladesystem die Montage von Sitzen für die Passagierbeförderung ermöglichen. Die Frachtladesysteme müssen daher flexibel und schnell umrüstbar sein.

Die zu transportierenden Frachtgüter können sehr vielfältig ausgebildet sein. Es werden genormte Container und Paletten sowie ungenormte Güter wie beispielsweise auf Spanplatten verzurrte Säcke oder Fahrzeuge transportiert. Die vergleichsweise hohen Lasten der Frachtgüter stellen sehr hohe Anforderungen bezüglich der Statik und Struktur an den Fußbodenaufbau und an die erforderlichen Lastenzurrpunkte. Weiterhin können bei speziellen Missionen spezielle Zusatzsysteme, wie medizinische Versorgungseinheiten auf dem Frachtraumboden befestigt werden. Insbesondere im Ernstfall müssen die verschiedenen Einsatzmöglichkeiten in einer extrem kurzen Umrüstzeit durch ein Minimum von Bedienpersonal realisiert werden können.

Bekannte Systeme verwenden für den Passagiertransport Paletten mit darauf montierten Passagiersitzen, wobei die Paletten auf dem Frachtdeck befestigt werden können. Soll das Flugzeug zur Frachtbeförderung eingesetzt werden, werden die Paletten entfernt und die auf dem Frachtdeck vorgesehenen üblichen Funktionseinheiten, wie Zurrpunkte, Rolleneinheiten, Riegelelemente und Führungsschienen sind freigegeben, so dass Paletten oder Container mit Fracht anstelle der Sitzpaletten befestigt werden können.

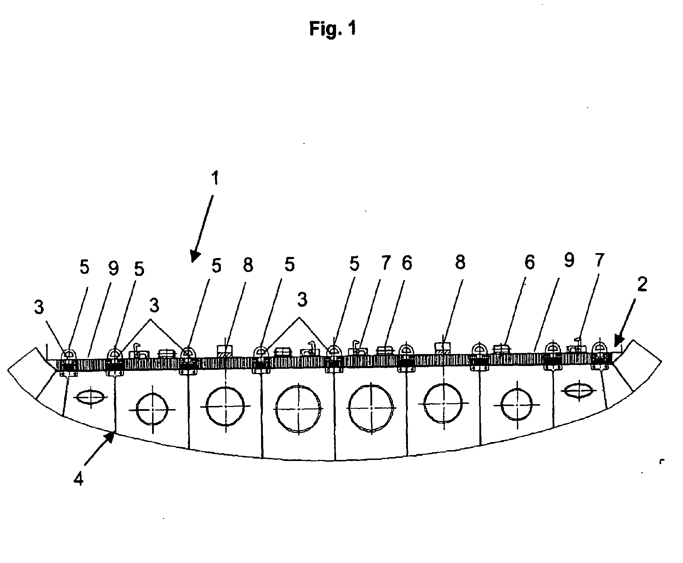

Sitze und weitere Systeme können auch alternativ direkt auf dem Frachtdeck montiert werden. Hierfür sind jedoch zusätzliche Befestigungsmöglichkeiten erforderlich. Üblicherweise werden als Montageschnittstellen dienende Befestigungsschienen oder Zurrpunkte so vorgesehen, dass entweder Passagiersitze oder die genannten Funktionselemente des Frachtladesystems auf dem Frachtraumboden befestigt werden können. Eine Anordnung von derartigen Funktionselementen auf dem Frachtraumboden ist in Fig. 1 der Zeichnung ersichtlich. Zurrpunkte sind vorgesehen zur Verzurrung von Lasten mittels eines Zurrringes. Die Zurrpunkte werden zahlreich und meistens in gleichen Abständen im Frachtraum verteilt. Der Zurrpunkt wird meistens direkt an der Flugzeugstruktur angebunden, um große Kräfte und Momente in alle Richtungen aufnehmen zu können. Falls die Zurrpunkte eines Frachtladesystems zusätzlich für die Montage von weiteren Komponenten oder System genutzt werden sollen, müssen sie ganz oder teilweise demontiert werden. Dieses ist zeitaufwändig in der Handhabung und kann zu einem Verlust der "losen" Zurrpunktteile führen.

Herkömmliche Vorrichtung zur Aufnahme von Zurrvorrichtungen für ein Frachtladesystem sind beispielsweise aus US 3,241,500 bekannt. Die hier beschriebene Vorrichtung ist nicht vollständig eben montier- bzw. versenkbar und somit auch für Verschmutzungen anfällig. Ebenso ist aus EP-A-0 894 713 ein System zur Aufnahme von Zurrvorrichtungen bekannt, wobei ein auf ein Boden aufgesetzter Grundkörper ebenfalls nicht ebenerdig abschließt und die Zurrvorrichtung störend für andere Transportaufgaben ist. Eine Anfälligkeit für Verschmutzungen besteht auch bei dieser Lösung.

Somit liegt der Erfindung die Aufgabe zugrunde, eine Vorrichtung zu entwickeln, welche die Verriegelung und/oder Verzurrung von Frachtgütern universeller Art ermöglicht, leicht zu reinigen und zu drainieren ist und in einfacher, zuverlässiger und flexibler Weise ein Frachtladesystem eines Flugzeuges entsprechend der Transportaufgabe schnell umrüstbar gestaltet.

Diese Aufgabe wird erfindungsgemäß durch die im Patentanspruch 1 genannten Maßnahmen gelöst.

Weiterbildungen und vorteilhafte Ausgestaltungen der Erfindung sind in den abhängigen Ansprüchen angegeben.

Dabei ist insbesondere vorteilhaft, dass mit der erfindungsgemäßen Vorrichtung in Form eines Zurrpunktkanals oder einer Fußbodenplatte/eines Bodenelements mit integrierten Zurrpunktkanälen oder Zurrpunktteilkanälen flexible Anschlussmöglichkeiten und Verzurrmöglichkeiten in einfacher und zuverlässiger Weise für ein Frachtladesystem zur Verfügung gestellt werden. Entsprechend der Transportaufgabe kann schnell durch ein Minimum von Bedienpersonal umgerüstet werden. Die Vorrichtung ist multifunktional ausgebildet, was für Änderungen und Anpassungen an Kundenwünsche teure Neuentwicklungen überflüssig macht oder zumindest minimiert. Mit dem flexiblen Einsatz von Adapterplatten, Lastaufnahmeadaptern und Zurrvorrichtungen kann mit einer leichten Handhabung eine Anpassung an die Transportaufgabe erfolgen. Mit der erfindungsgemäßen Vorrichtung ist eine gewichtseinsparende Lösung realisiert, da neben einem Zurrpunktanschluss auch flexibel andere Komponenten im Kanal aufgenommen werden können und hierfür keine zusätzlichen, teuren Anschlusspunkte an der Struktur notwendig sind. Außerdem wird durch die Form der Kanalausbildung eine einfache Drainagemöglichkeit für den Kanal bzw. für die Fußbodenelemente und den integrierten Schnittstellen geschaffen.

Gemäß einem Ausführungsbeispiel der Erfindung ist die Zurrvorrichtung mit einem schwenkbaren Zurrelement versehen, das mit zwei Endabschnitten am Grundkörper um eine Schwenkachse schwenkbar gelagert ist. Dabei weist der Grundkörper weiterhin eine Aufnahme auf, die mindestens ein Schnittstellenelement für weitere Komponenten aufnehmen kann.

Gemäß einem weiteren Ausführungsbeispiel der Erfindung ist das Zurrelement um die Schwenkachse in eine annähernd horizontale Lage zu schwenken, um den Zugang zur Aufnahme zuzulassen.

Gemäß einem weiteren Ausführungsbeispiel der Erfindung weist die Aufnahme eine Querbohrung zur Aufnahme eines Verriegelungsbolzens auf.

Gemäß einem weiteren Ausführungsbeispiel der Erfindung weist der Grundkörper eine Befestigungsfläche mit Befestigungsmitteln zum Anschluss von Adapterplatten bzw. Abdeckplatten auf.

Gemäß einem weiteren Ausführungsbeispiel der Erfindung ist die Fußbodenplatte mit einer Verschleißplatte abgedeckt, die ebenfalls an den Kanalseitenwänden befestigt ist.

Gemäß einem weiteren Ausführungsbeispiel der Erfindung sind zumindest im Bereich der Aufnahme eine Dichtung bzw. Dichtungsstreifen vorgesehen.

Gemäß einem weiteren Ausführungsbeispiel der Erfindung ist die Bodenplatte des Zurrpunktkanals an der Flugzeugstruktur, vorzugsweise an einem Flugzeugspant, mittels Befestigungsmittel fixierbar.

Gemäß einem weiteren Ausführungsbeispiel der Erfindung bilden mehrere hintereinander angeordnete Zurrpunktkanäle eine Führung für einen Warmluftstrom zur Erwärmung der Elemente, wie beispielsweise Zurrvorrichtungen, Lastaufnahmen, Schnittstellenelemente.

Weitere Einzelheiten und Vorteile ergeben sich aus der nachfolgenden Beschreibung von Ausführungsbeispielen der Erfindung.

In der Zeichnung sind Ausführungsbeispiele der Erfindung dargestellt, welche nachstehend anhand der Figuren 1 bis 16 näher beschrieben sind. In den Figuren sind gleiche Bauteile mit gleichen Bezugszeichen versehen.

Es zeigen im einzelnen:
- Fig. 1: einen Querschnitt eines Fußbodens im Frachtdeck eines Flugzeuges nach dem Stand der Technik,
- Fig. 2: eine erfindungsgemäße Vorrichtung, hier dargestellt als Zurrpunkt- kanal in einer Perspektivdarstellung,
- Fign. 3 u. 4: Ausführungsformen des Zurrpunktkanals in Verbindung mit Fußbo- denelemente in Querschnittsdarstellungen,
- Fign. 5 u. 6: eine Fußbodenplatte mit integrierten Zurrpunktkanälen, dargestellt in einer Querschnitt- und einer Perspektivdarstellung,
- Fig. 7: eine Ausführungsform der erfindungsgemäßen Vorrichtung als Bo- denelement mit integrierten Kanälen,
- Fig. 8: ein Bodenelement gemäß Fig. 7 in einer weiteren Ausführungsform,
- Fig. 9: eine Zurrvorrichtung als Bestandteil des erfindungsgemäßen Zurr- punktkanals in einer Perspektivdarstellung,
- Fig. 9A: der Grundkörper der Zurrvorrichtung in einer zweigeteilten Ausfüh- rung,
- Fig. 10: die Zurrvorrichtung in einer zweiten Ausführungsform in den Ansich- ten von vom und von der Seite,
- Fig. 11: die Zurrvorrichtung in einer dritten Ausführungsform in einer Per- spektivdarstellung,
- Fign. 12 bis 16: der Zurrpunktkanal in Kombination mit Verwendungsmöglichkeiten der Zurrvorrichtung und weiteren Schnittstellen zur Lastaufnahme.

In Fig. 1 ist ein nach dem Stand der Technik bekannter Fußboden 2 eines Flugzeugdecks 1 in einer Querschnittsdarstellung gezeigt. Bekannte Systeme verwenden für den Passagiertransport Paletten mit darauf (fest) montierten Passagiersitzen, welche auf dem Frachtdeck 1 befestigt werden können. Soll das Flugzeug zur Frachtbeförderung - wie in Fig. 1 dargestellt - eingesetzt werden, werden die Sitzpaletten entfernt und die auf dem Frachtdeck 1 vorgesehenen üblichen Funktionseinheiten, wie Zurrpunkte 3 mit Zurrringen 5, Rolleneinheiten 6, Riegelelemente 8 und Führungsschienen 7 werden freigegeben, so dass Paletten oder Container mit Fracht anstelle der Sitzpaletten befestigt werden können. Die Zurrpunkte 3 werden zahlreich und meist in gleichen Abständen über den gesamten Frachtraum verteilt. Sie sind meistens direkt an der Flugzeugstruktur 4 befestigt und können über Zurrringe 5 große statische Kräfte aufnehmen.

Sitze und weitere Systeme, wie beispielsweise medizinische Versorgungseinrichtungen (Krankenbarren) und zusätzliche Führungsschienen können alternativ direkt auf dem Frachtdeck montiert werden. Hierfür sind jedoch zusätzliche Befestigungsmöglichkeiten erforderlich oder die zur Aufnahme von großen Kräften vorgesehenen Zurrpunkte 3 müssen umgerüstet werden, wie z.B. durch Entfernung der Zurrringe 5, was in der Handhabung sehr zeitaufwändig ist.

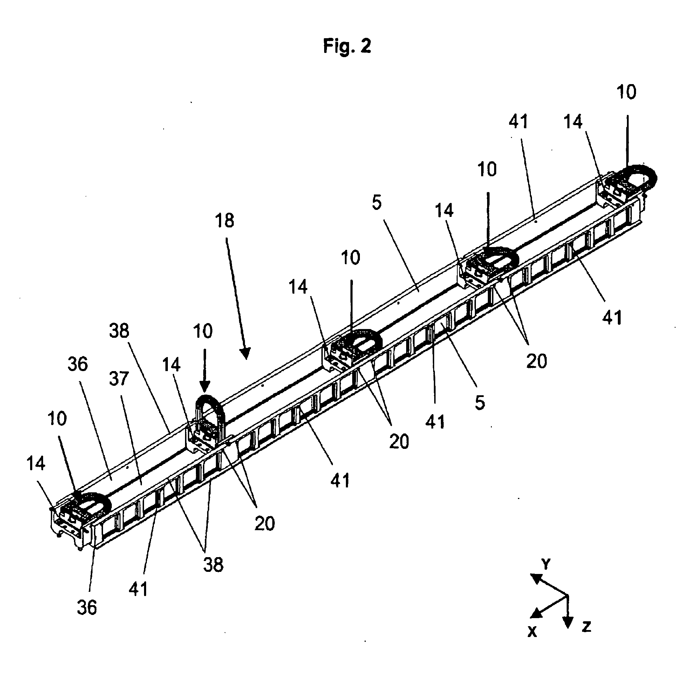

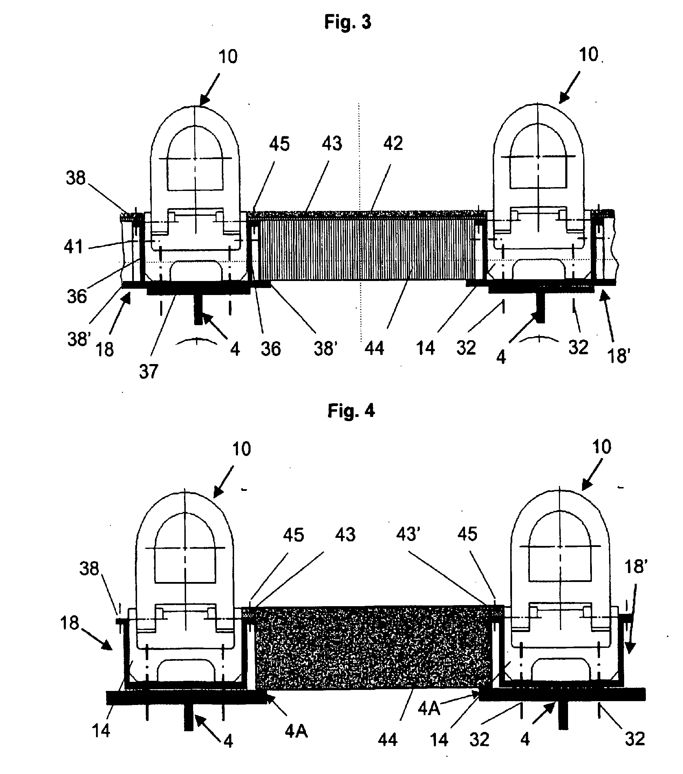

In Fig. 2 ist eine erfindungsgemäße Vorrichtung gezeigt, hier dargestellt als Zurrpunktkanal 18 für die Aufnahme und für den Anschluss von Zurrvorrichtungen sowie weiteren Schnittstellen, die als Adapter für die Integration zusätzlicher Systeme oder Komponenten dienen können. Der Zurrpunktkanal 18 weist im wesentlichen einen u-förmigen Querschnitt auf, der durch Kanalseitenwände 36 und eine Bodenplatte 37 gebildet ist In der gezeigten Ausführung ist innerhalb der erfindungsgemäßen Vorrichtung 18 in regelmäßigen Abständen eine Zurrvorrichtung 10 angeordnet. Vorzugsweise durch die Zurrvorrichtungen 10 erfolgt eine Befestigung auf der tragenden Struktur 4, wie näher in den Figuren 3 und 4 gezeigt ist. In den Figuren 3 und 4 wird gezeigt, wie der Zurrpunktkanal 10 vorteilhaft in den Fußboden eines Frachtdeckes integriert werden kann, indem die Seitenwände 36 des Kanals 18 an Fußbodenplatten anschließen und somit einen ebenen, belastbaren und begehbaren Fußboden bilden.

In Fig. 3 ist ersichtlich, dass der Zurrpunktkanal 18 bzw. 18' gleichzeitig als Montageinterface für die Befestigung und Abdichtung von Bodenelementen wie Verschleißplatten 42 und Fußbodenplatten 44 dienen kann. Aufnahmen bzw. Auflager 38 vorzugsweise mit Befestigungsmöglichkeiten 45 wie Gewindebohrungen, können dafür an den Kanalseitenwänden 36 vorgesehen sein. Wird der Zurrpunktkanal 18 auf bzw.- an einer tragenden Struktur befestigt, können Lasten und Kräfte, die durch die Anbindung weiterer Komponenten am Zurrpunktkanal 18 entstehen, aufgenommen und in die tragende Struktur abgeführt werden. Der Zurrpunktkanal 18 wird vorzugsweise über die Zurrvorrichtung 10 an bzw. auf einer tragenden Struktur 4, beispielsweise mit den Spanten einer Flugzeugstruktur verbunden und vorzugsweise in Z-Richtung verschraubt. Gibt es zusätzlich seitliche Befestigungsmöglichkeiten an der Zurrvorrichtung 10 zum Kanal 18, wie die in Fig. 2 gezeigten seitlichen Befestigungsbohrungen 20, können die Kanalwände 36 und bedarfsweise auch seitlich danebenliegende z.B. tragende Elemente mit der Zurrvorrichtung 10 verbunden und somit noch größere Kräfte und Momente übertragen werden. In Fig. 3 ist eine Anordnung von zwei Zurrpunktkanälen 18, 18' mit einer dazwischenliegenden Fußbodenplatte 44 gezeigt. Die Fußbodenplatte 44 kann ein extrudiertes Profil, ein Compositbauteil, ein gefrästes Profil oder ähnliches sein und damit eine Lastverteilung übernehmen, beispielsweise wenn Druckkräfte durch Reifenlasten auftreten. Die Bodenplatte 44 und auch die darunter befindlichen Struktur- und Systemteile werden durch die auf der oberen Oberfläche der Bodenplatte 44 angeordneten Dichtung 43 und einer darüber angeordneten Verschleißplatte 42 gegen Schmutz und Feuchtigkeit abgedichtet. Eine Abdichtung ist notwendig, um Flüssigkeiten und Schmutz nicht in den Frachtraumboden ablaufen zu lassen, sondern eine gezielte Abführung/Drainage in die Kanäle 18, 18' zu ermöglichen. Die Verschleißplatte 42, die hohen mechanischen Einflüssen ausgesetzt ist, da sie eine Verkehrsfläche für beispielsweise Reifenlasten, Kettenfahrzeuglasten oder deren Bewegung bildet, sowie die Dichtung ist mit Befestigungsmitteln 45 an Aufnahmeflächen 38 im oberen Bereich der Kanalseitenwände 36 des jeweiligen Zurrpunktkanals 18, 18' verbunden. Weiterhin ist die Fußbodenplatte 44 auf stegartigen Verlängerungen (Auflager 38') der Bodenplatte 37 des jeweiligen Zurrpunktkanals 18, 18' aufgelegt und befestigt. Eine leichte und kostengünstige Austauschbarkeit der Verschleißplatte 42 sowie möglicherweise der Dichtung 43 ist damit realisiert. Insbesondere bei Beschädigungen der Platten 42 und 44 sowie zur einfachen und schnellen Zugänglichkeit zu anderen Systemen, die unterhalb des Fußbodens verlaufen, ist das unaufwändige Auswechseln von hoher Bedeutung.

In Fig. 4 ist eine weitere Ausführungsform von zwei Zurrpunktkanälen 18, 18' mit einer dazwischenliegenden Fußbodenplatte 44 gezeigt. Im wesentlichen sind die Elemente der in Fig. 3 gezeigten Anordnung übernommen worden. Die alternative Ausführungsform der Fußbodenplatte 44 weist jedoch eine integrierte Abdeck-bzw. Verschleißplatte auf. Dichtungsstreifen 43 und 43' im Bereich der Befestigung der Platte 44 an den Aufnahmen 38 des Zurrpunktkanals 18 bzw. 18' ermöglichen das Abdichten der Fußbodenstruktur zum Schutz der darunterliegenden Systemtechnik gegen Schmutz und Feuchtigkeit. Eine gezielte Abführung/Drainage des Schmutzes in die Kanäle 18,18' ist damit erreicht. Auch der Zurrpunktkanal 18 bzw. 18' ist in einer alternativen Ausführungsvariante gezeigt. Das Querschnittsprofil ist im wesentlichen u-förmig ausgebildet und weist keine unteren Auflageflächen 38' zum Abstützen der Fußbodenplatten 44 auf. Auflageflächen 4A der Flugzeugstruktur sind hier vorgesehen. Ein unaufwändig herstellbarer Zurrpunktkanal 18 bzw. 18', beispielsweise aus einem extrudierten Profil, ist mit dem Wegfall der unteren Auflagerflächen 38' erreicht.

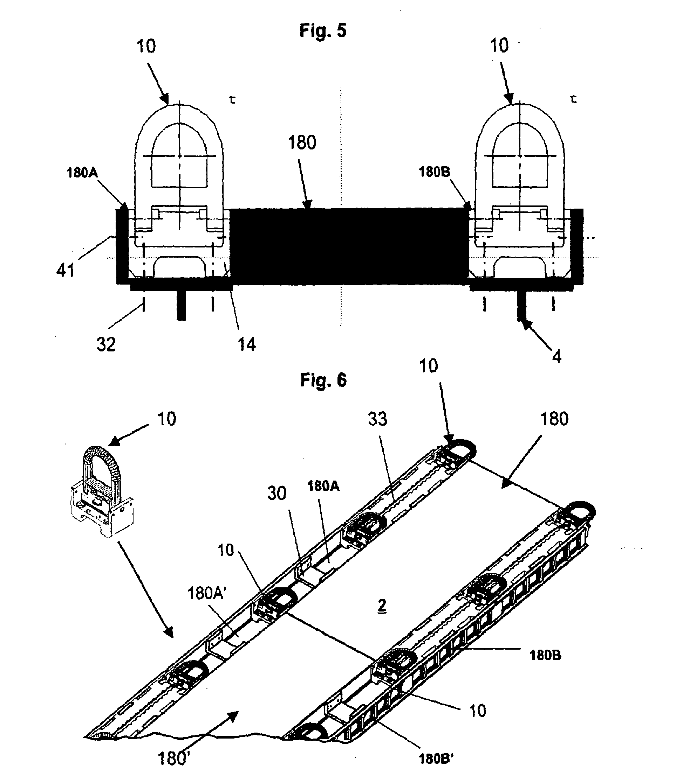

In den Figuren 5 bis 8 werden weitere Ausführungsformen der erfindungsgemäßen Vorrichtung 18 als modulare (Fuß-) Bodenelemente oder Fußbodenplatten 180 mit integrierten Kanälen oder Teilkanälen für Zurrvorrichtungen 10, Funktionselemente 8, Adapterplatten 33, Lastaufnahmeadapter 30, etc. dargestellt.

Eine Fußbodenplatte 180 mit integrierten Zurrpunktkanälen 180A und 180B ist in Fig. 5 in einer Querschnittsdarstellung und in Fig. 6 in einer Perspektivdarstellung gezeigt. Die Fußbodenplatte 180 kann direkt über Befestigungsmittel 32 an der Flugzeugstruktur 4 befestigt werden, wobei vorzugsweise die Zurrpunkte 10 mit deren Grundkörper 14 zur Verbindung mit der Struktur 4 vorgesehen sind. Eine direkte Lasteinleitung in die Struktur 4 ohne weitere Befestigungs- bzw. Schraubverbindungen auch von auf die Fußbodenplatte 180 wirkenden Lasten ist somit erreicht. Die Zurrvorrichtungen 10 sind vorzugsweise über untere und seitliche Befestigungsmöglichkeiten 32 und 41 in den Zurrpunktkanälen 180A bzw. 180B befestigt. In Fig. 6 ist das Fußbodenelement 180 in einer Perspektivdarstellung ersichtlich, wobei erkennbar ist, dass mehrere hintereinander angeordnete Fußbodenelemente 180 und 180' einen begehbaren Fußbodenbereich 2 sowie einen längsverlaufenden Abschnitt mit durchgängigen Zurrpunktkanälen 180A, 180A' und 180B, 180B' bilden. Eine Verbindung der Fußbodenelemente 180 und 180' kann vorteilhaft auch mittels der Zurrvorrichtungen 10 erfolgen. Mehrere hintereinander angeordnete Zurrpunktkanäle (180A, 180A', 180B, 180B') können vorteilhaft eine Führung für einen Warmluftstrom zur Erwärmung der Elemente, wie beispielsweise Zurrvorrichtungen (10), Lastaufnahmen (30) oder ähnlichen Komponenten bilden, was die Funktionsfähigkeit des Frachtladesystems auch unter extremen Kältebedingungen gewährleistet.

Neben den Zurrvorrichtungen 10 sind variabel und entsprechend der Anforderungen flexibel weitere Schnittstellenelemente in den Zurrpunktkanal 180A bzw. 180B einsetzbar. Gezeigt sind in der Ausführungsform Lastaufnahmeadapter 30 sowie Adapterplatten 33, die ein üblicherweise bekanntes Befestigungsprofil (auch bezeichnet als Sitzschienenprofil) aufweisen und die zur Anbindung weiterer Komponenten geeignet sind.

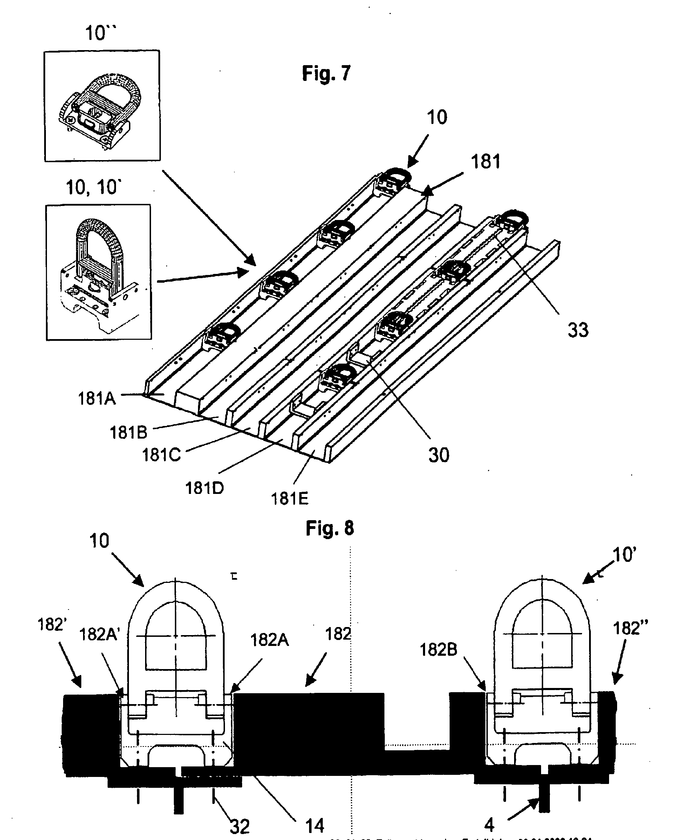

In Fig. 7 ist ein Bodenelement 181 mit mehreren integrierten, nebeneinander angeordneten Kanälen 181A bis 181 E gezeigt. In der gezeigten Ausführungsform sind die Kanäle 181A sowie 181D als Zurrpunktkanäle ausgebildet und sind vorgesehen zur Aufnahme von Zurrvorrichtungen 10 oder, wie bereits in den vorangegangenen Figuren detaillierter beschrieben, zur Aufnahme von Adapterplatten 33, Lastaufnahmeadapter 30 oder ähnlichen Schnittstellenelementen. Die benachbart angeordneten Kanäle 181B, 181C oder 181E können weitere Funktions- oder Schnittstellenelemente aufnehmen. Ebenso ist ein schmaler Bereich einer Fußbodenplatte (Trittfläche) 2 zwischen dem Kanal 181A und dem Kanal 181 B vorgesehen. Eine Befestigung dieses Bodenelements 181 an einer Bodenstruktur ist in unaufwändiger Art und Weise mit den Zurrvorrichtungen 10 ermöglicht, wie bereits in der Beschreibung zur Fig. 5 erläutert.

In Fig. 8 ist eine zur Fig. 5 abgewandelte Ausführungsform einer Bodenplatte 182 mit integrierten Zurrteilkanälen 182A und 182B gezeigt. Die Bodenplatte 182 ist in den Seitenbereichen so geformt, dass die integrierten Zurrteilkanäle 182A bzw. 182B jeweils die Hälfte eines vollständigen Zurrpunktkanals bilden. Jeweils zwei nebeneinanderliegende Bodenplatten 182 und 182' bilden so einen vollständigen Zurrpunktkanal. Über den Grundkörper 14 der Zurrvorrichtung 10 können somit jeweils zwei Bodenplatten 182 und 182' gleichzeitig mittels Befestigungselementen 32 an der Struktur 4 befestigt werden. Das Gleiche gilt für die benachbarte Bodenplatte 182" und die Bodenplatte 182. Vorteilhaft ist bei dieser Ausführungsform, dass die Befestigung der Bodenplatten vereinfacht erfolgt und eine Lasteinleitung der auftretenden Lasten an der Bodenplatte direkt, ohne eine zusätzliche Schraubbefestigung, in die Struktur erfolgen kann.

Mit den verschiedenen Ausführungsformen ist die Flexibilität und die Vielfältigkeit der Anwendungsmöglichkeiten der erfindungsgemäßen Vorrichtung 18 bzw 180 bzw. 181 bzw. 182 als Schnittstelle für Lasten in einem Frachtraumboden eines Flugzeuges gezeigt.

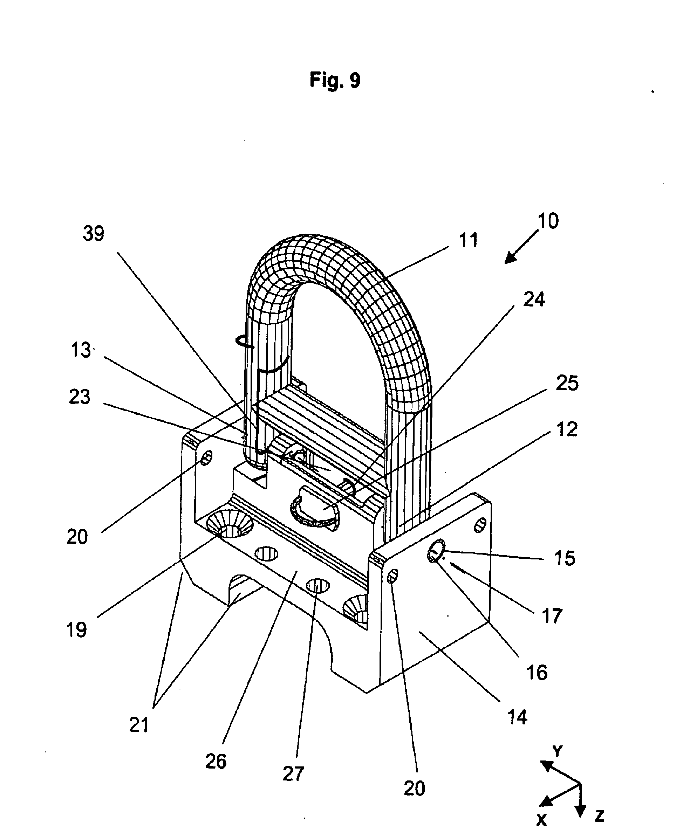

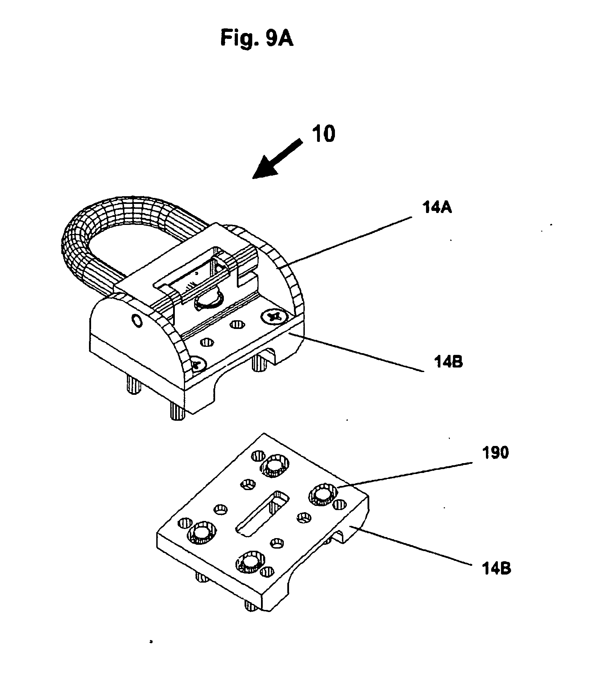

Die Figuren 9 bis 11 zeigen mögliche Ausführungsformen von Zurrvorrichtungen 10 als wesentlicher Bestandteil des Zurrpunktkanals 18. In Fig. 9 wird die Zurrvorrichtung 10 in einer Perspektivdarstellung gezeigt. Die Zurrvorrichtung 10 beinhaltet ein Zurrelement 11, das vorzugsweise eine um 90°gedrehte-D-Form aufweist. Mit der D-Form ist eine Verlängerung des Bogens in zwei Endabschnitte 12 und 13 erreicht, die zur Verbindung mit einem Grundkörper 14 ausgebildet sind. Die Endabschnitte 12 und 13 sind jeweils mit Querbohrungen 15 versehen durch die jeweils ein Verbindungsbolzen 16 gesteckt wird. Die Verbindungsbolzen 16 sind vorzugsweise am Grundkörper 14 gelagert. Das Zurrelement 11 ist somit um eine Schwenkachse 17 schwenkbar und kann bei Nichtgebrauch in eine horizontale Lage geschwenkt werden. Vorzugsweise befindet sich zwischen Grundkörper 14, Verbindungsbolzen 16 und Zurrelement 11 eine Rückholfeder 39, die bewirkt dass das Zurrelement bei Nichtgebrauch automatisch eine horizontale Lage einnimmt. Die Rückholfeder verhindert außerdem bei Vibrationen des Transportmittels ein Schwingen und Klappern des Zurrelements.

Der Grundkörper 14 ist an den als Zurrpunkte 3 (siehe Fig. 1) definierten Positionen innerhalb des in den vorherigen Figuren gezeigten Zurrpunktkanals 18 oder 180A, 180B, 181A und 181D oder 182A, 182B angeordnet. Der Grundkörper 14 weist Befestigungsbohrungen 19 auf, durch die mittels Befestigungsmittel 32 eine Anbindung an die Flugzeugstruktur 4, vorzugsweise als Befestigung an einem Spant, erfolgt. Der Zurrpunktkanal 18 weist entsprechende Durchgangsbohrungen auf. In der gezeigten Ausführung sind weiterhin seitliche Befestigungsbohrungen 20 angeordnet, um mit den Kanalseitenwänden 36 eine Verbindung herstellen zu können. An der Unterseite des Grundkörpers 14 sind Freifräsungen 21 vorgesehen, die eine brückenförmige Gestaltung aufweist und als Wasser- und Schmutzablauf vorgesehen ist. Flüssigkeiten, wie beispielsweise Schmutzwasser kann somit innerhalb des Zurrpunktkanals leicht abfließen. Eine leichte Reinigung des entsprechenden Zurrpunktkanals sowie der Zurrvorrichtung 10 ist möglich durch die konstruktive Gestaltung mit großen Wasserablauf- und Luftdurchflutungsöffnungen. Ebenso ist eine Führung für einen Warmluftstrom zur Erwärmung der Elemente ermöglicht, um auch unter extremen Kältebedingungen eine Funktionsfähigkeit des Frachtladesystems aufrechtzuerhalten.

Eine vorteilhafte Ausführungsform des Grundkörpers 14 ist in Fig. 9A gezeigt. Eine Zweiteilung des Grundkörpers in einen oberen Block 14A sowie einen unteren Block 14B ist vorteilhaft, wenn für den Einbau im Zurrpunktkanal eine Justierung bzw. Ausgleichsmöglichkeit geschaffen werden soll. Durch die Zweiteilung ist eine Justage/ Ausgleichsmöglichkeit der Zurrvorrichtung 10 bzw. des unteren Supportblocks 14B relativ zur Struktur oder zum Zurrpunktkanal 18 bzw. des oberen Blocks 14A relativ zum unteren Supportblock 14B möglich, wobei:
- Langlöcher/ größere Bohrungen 190 im Supportblock 14B zur Befestigung an der Struktur
- Größere Löcher im Spant (Flugzeugtragstruktur)
- mögliche Befestigung mit Scheibe und Mutter
- Größere Bohrungen im oberen Block 14A vorgesehen sein können.

Durch diese Justage-/ Ausgleichsmöglichkeit mit Toleranzausgleichsmitteln ist eine genaue Einbaumöglichkeit der Zurrvorrichtungen 10 (bzw. von zentralen Aufnahmebohrungen 23 der Zurrvorrichtungen 10) zueinander bzw. relativ zur ungenauen Flugzeugtragstruktur in X-/ Y- Richtung möglich. Dieses ist wichtig für die in/ auf den Zurrvorrichtungen einzubauenden Systeme/ Equipment. Die Z- Toleranz kann optional durch dünne Bleche zwischen oberem und unterem Block 14A, 14B ausgeglichen werden.

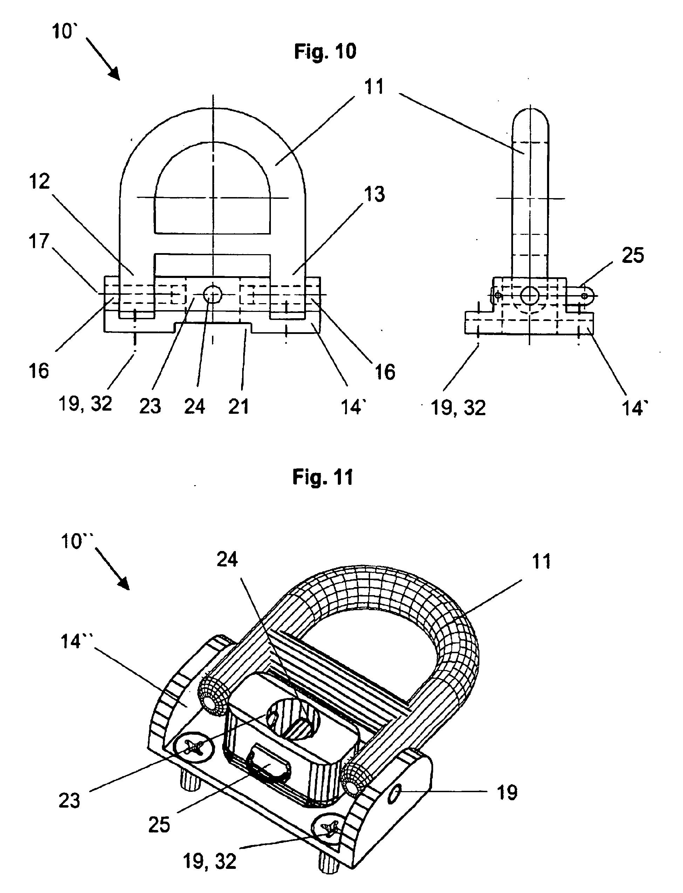

Ein wesentlicher Bestandteil des Grundkörpers 14 ist eine zentrale Aufnahme 23, die vorzugsweise rund, quadratisch oder rechteckig ausgebildet sein kann. Die Aufnahmeöffnung 23 ist als Alternative vorgesehen, um Komponenten, die nicht mittels des Zurrelementes 11 im Frachtdeck befestigt werden können, zu fixieren. Je nach geometrischer Ausführung der Aufnahmeöffnung 23 können große statische Kräfte und Momente in allen Richtungen aufgenommen werden. In der gezeigten Ausführung ist die Aufnahmeöffnung 23 rechteckförmig ausgebildet und mit einer zusätzlichen Querbohrung 24 versehen. Durch die Querbohrung 24 kann eine innerhalb der Aufnahmeöffnung 23 zu fixierende Komponente 31 mittels eines Verriegelungsbolzens 25 gesichert werden (siehe auch Fig. 11). So können über den Verriegelungsbolzen 25 zusätzlich Kräfte und Momente aufgenommen werden. Eine weitere Befestigungsfläche 26 ist vorgesehen, um mit üblichen Befestigungsmöglichkeiten eine Aufnahme und Montage von z.B. Abdeck- oder Adapterplatten zu ermöglichen. Dafür sind als Befestigungsmöglichkeiten beispielsweise Gewindebohrungen 27 an der Befestigungsfläche 26 angeordnet. Für die Nutzung der zentralen Aufnahmeöffnung 23 ist das Zurrelement 11 soweit zu schwenken bis die Aufnahmeöffnung frei zugänglich ist bzw. durch eine Rückholfeder 39 z.B. zwischen Grundkörper 14, Verbindungsbolzen 16 und Zurrelement 11 wird bei Nichtgebrauch des Zurrelementes 11 automatisch eine horizontale Position eingenommen.

In Fig. 10 ist in einer Zwei-Seiten-Darstellung eine Zurrvorrichtung 10' in einer zweiten Ausführungsform ersichtlich. Der Grundkörper 14' mit einer zentralen Aufnahmeöffnung 23, Freifräsungen 21 an der Unterseite, Befestigungsmöglichkeiten 19, 32 und Befestigungsflächen 26 entsprechen der ersten Ausführungsform der Zurrvorrichtung 10; seitliche Befestigungsbohrungen 20 fehlen hier. Der Grundkörper 14' ist zur Montage in Zurrpunktkanälen/ Fußbodenplatten vorgesehen.

In Fig. 11 ist eine perspektivische Darstellung einer Zurrvorrichtung 10" in einer dritten Ausführungsform ersichtlich. Ähnlich zur Fig. 10 fehlen hier jedoch die seitlichen Befestigungsbohrungen 20 und die an der Unterseite des Grundkörpers 14" befindlichen Freifräsungen 21.

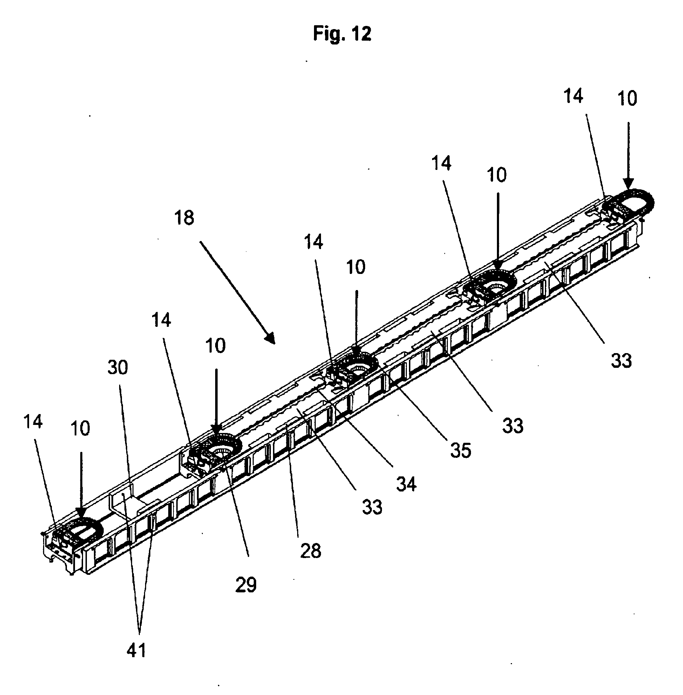

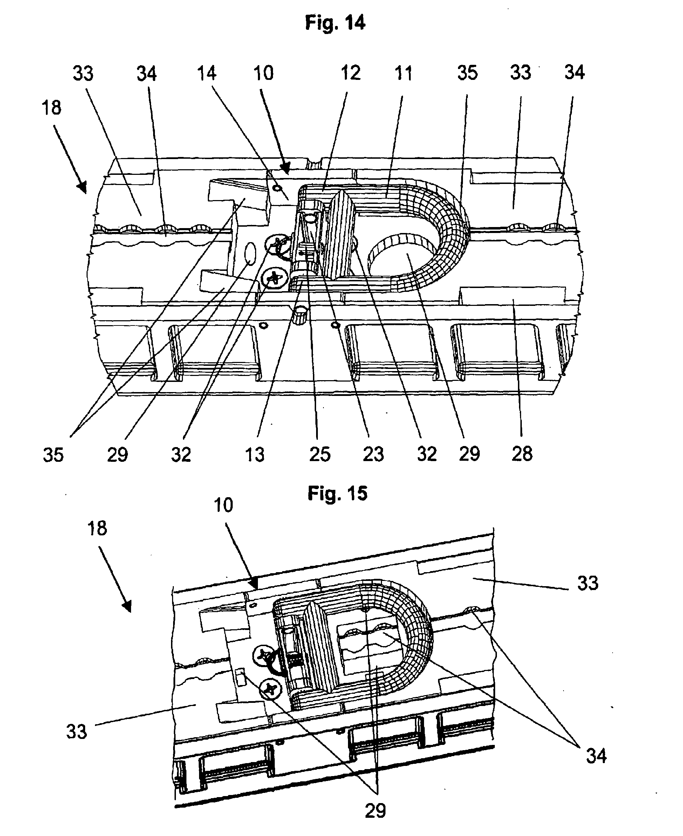

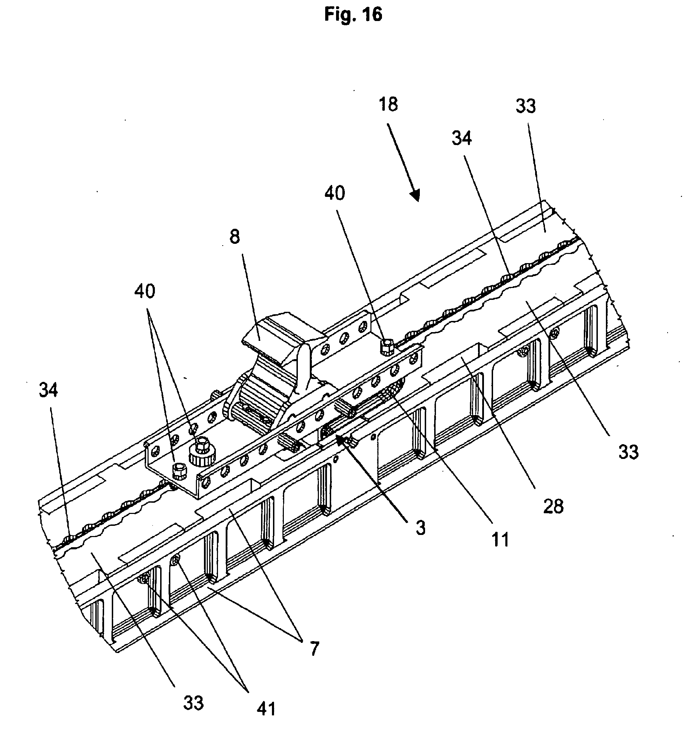

In den Figuren 12 bis 16 sind erfindungsgemäße Vorrichtungen - hier in Form eines Zurrpunktkanals 18 - in verschiedenen Bauvarianten gezeigt. Mindestens eine Zugvorrichtung 10 ist als wesentlicher Bestandteil des Zurrpunktkanals 18 in regelmäßigen Abständen angeordnet. Mittels Befestigungsschrauben können Adapterplatten 33 vorzugsweise direkt am Grundkörper 14 oder durch den Grundkörper 14 hindurch an der Flugzeugstruktur befestigt werden: Die Adapterplatten 33 können entsprechend dem Verwendungszweck für die Befestigung bzw. Lagerung verschiedenster Systeme oder Komponenten genutzt werden. Vorzugsweise sollten die Adapterplatten ein immer wiederkehrendes Befestigungsprofil 34 aufweisen. In den gezeigten Ausführungen sind mehrere Adapterplatten 33 mit einem aus der zivilen Luftfahrt bekannten Sitzschienenprofil 34 versehen. Dieses Befestigungsprofil kann direkt in den Adapterplatten eingearbeitet oder als eigenständiges Bauteil mit der Adapterplatte verbunden oder in diese integriert, vorzugsweise verschraubt werden. Ein derartiges Sitzschienenprofil 34 ist als Schwalbenschwanzprofil mit Einrastlöchem im Abstand von einem Zoll ausgebildet. Damit bestehen Anschlussmöglichkeiten für Sitze (in der Nutzung für den Passagiertransport) oder auch für Komponenten aus einem Frachtladesystem, wie Riegelelemente 8, zusätzliche Rollenbahnen 6, Anbringung von Führungsschienen 7, etc.. Eine derartige Ausführungsform mit Riegelelementen 8 ist detailliert in der Fig. 16 gezeigt. Die Adapterplatten 33 können jedoch auch ersetzt werden durch geometrisch einfache Platten als Abdeckplatten für die nichtgenutzten Bereiche des Zurrpunktkanals 18. Sie werden vorzugsweise direkt an der Befestigungsfläche 26 der Zurrvorrichtung 10 befestigt und/ oder am Zurrpunktkanal 18. Treten größere Lasten auf, beispielsweise Reifendrucklasten eines Fahrzeugs, können in einer weiteren Ausführungsform (siehe auch Fig. 7) zusätzliche Lastaufnahmeadapter 30 zwischen den Zurrvorrichtungen in den Zurrpunktkanal 18 integriert bzw. direkt mit den Kanalseitenwänden 36 verbunden werden. Auf derartige Lastaufnahmeadapter 30 können Abdeckplatten bzw. Adapterplatten zusätzlich zu den Zurrvorrichtungauflagerflächen 26 aufliegen bzw. an ihm befestigt werden um größere Lasten und Kräfte aufzunehmen und an die Struktur weiterleiten zu können. Vorzugsweise können die Adapterplatten 33 und ggf. auch die Abdeckplatten (nicht gezeigt) Wassereinlaufschlitze 28 bzw. Ablauföffnungen 29 aufweisen (siehe Figuren 12 bis 15). Dadurch kann beispielsweise Oberflächenwasser oder Schmutzwasser in den Zurrpunktkanal 18 laufen und dort in Kanallängsrichtung drainiert werden. Mit der Nutzung des Kanals 18 als Drainagesystem ist es erreicht, dass kein stehendes Wasser im System verbleibt und damit das Korrosionsverhalten verbessert wird.

Eine beidseitige Nutzung der Adapterplatten 33 kann ebenfalls realisiert werden. In dieser (nicht gezeigten) Ausführungsform weisen die Platten 33 auf einer Seite eine Befestigungsmöglichkeit, beispielsweise das Sitzschienenprofil 34 auf. Bei Nichtgebrauch dieser Befestigungsmöglichkeit werden die Platten 33 umgedreht, um die Schnittstelle vor Verschmutzung und mechanischer Beschädigung zu schützen. Beispielsweise beim Befahren des Flugzeugdecks und damit auch des Zurrpunktkanals 18 mit schweren Fahrzeugen ist der Schutz der Schnittstellen notwendig.

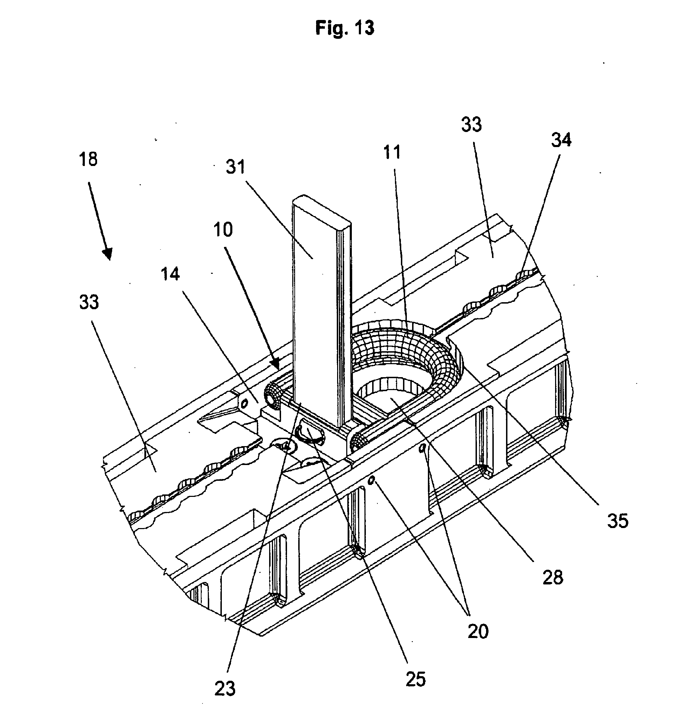

Darüber hinaus ist, wie in Fig. 13 gezeigt, die Aufnahmeöffnung 23 der Zurrvorrichtung 10 als Schnittstelle zur Aufnahme von weiteren Installationen und Systemen, wie beispielsweise medizinische Versorgungseinrichtungen, Krankentragen, Sitze, Führungsschienen vorgesehen. Beispielhaft ist ein Schnittstellenelement 31 gezeigt, welches innerhalb der Aufnahmeöffnung 23 mittels des Verriegelungsbolzens 25 fixiert ist. Die Zurrvorrichtung 10 mit den Funktionen eines Zurrpunktes und einer Aufnahme 23 in Kombination mit Adapterplatten 33 und/oder Lastaufnahmeadaptem 30 können integriert im Zurrpunktkanal 18 eine multifunktionelle und flexible Anpassung des Frachtdeckes an die durchzuführenden Transportaufgaben gewährleisten. Ersichtlich ist in allen Darstellungen, dass für das Umklappen des Zurrelementes 11 in den entsprechenden benachbarten Adapterplatten 33 Aussparungen 35 vorgesehen sind, um ein Versenken des Elementes 11 ohne störende Übergänge und damit einen ebenen Boden zu erreichen.

In Fig. 16 ist gezeigt, wie an einer Adapterplatte 33 eine weitere Komponente bzw. ein Funktionselement befestigt werden kann. Das hier gezeigte Funktionselement ist als Riegelelement 8 ausgebildet und ist in Längsrichtung des Zurrpunktkanals 18 in dem Sitzschienenprofil 34 einer Adapterplatte 33 fixiert. Dafür wurden die Befestigungsbolzen 40 in das Sitzschienenprofil eingeführt und verriegelt. Derartige Schnellverschlüsse sind aus dem zivilen Flugzeugbau unter anderem zur Befestigung von Sitzen bekannt. Möglich ist es auch, an der Adapterplatte 33 anstelle der Verbindung Sitzschienenprofil- Befestigungsbolzen andere übliche Befestigungsmethoden einzusetzen. Mit dem Riegelelement 8 ist das Verriegeln von Standardcontainern-/ Paletten möglich, was die Einsatzmöglichkeit zum Frachttransport weiter verbessert.

### Bezeichnungsliste

- (1): Flugzeugdeck (Frachtdeck)
- (2): Fußboden
- (3): Zurrpunkte
- (4): Flugzeugstruktur
- (4A): Auflager an Flugzeugstruktur
- (5): Zurrringe
- (6): Rolleneinheiten
- (7): Führungsschienen-/ Einheiten
- (8): Riegelelemente/ Funktionselement
- (9): Fußbodenplatte
- 10,10',10": Zurrvorrichtung
- 11: Zurrelement
- 12, 13: Endabschnitte
- 14, 14', 14": Grundkörper
- 14A, 14B: oberer und unterer Block des Grundkörpers
- 15: Querbohrungen
- 16: Verbindungsbolzen
- 17: Schwenkachse
- 18: Zurrpunktkanal
- 18': zweiter Zurrpunktkanal
- 180: (Fuß-) Bodenelement/ modulare Fußbodenplatte mit in- tegrierten Zurrpunktkanälen
- 180A, 180B: integrierte Zurrpunktkanäle
- 181: Bodenelement in zweiter Ausführungsform
- 181A bis 181E: Kanäle im Bodenelement 181
- 181A, 181D: als Zurrpunktkanäle ausgebildete Kanäle
- 182, 182': Bodenelement in einer dritten Ausführungsform
- 182A, 182B: Zurrpunktteilkanäle
- 19: Befestigungsmöglichkeit z.B. Bohrungen
- 190: Langlöcher / größere Bohrungen
- 20: seitliche Befestigungsmöglichkeiten z.B. Durchgangs- bohrungen

- 21: Freifräsung
- 23: Aufnahmeöffnung
- 24: Querbohrung
- 25: Verriegelungsbolzen in Aufnahmeöffnung
- 26: Befestigungsfläche
- 27: Befestigungsmöglichkeit z.B. Gewindebohrungen
- 28: Wassereinlauföffnungen-/ schlitze
- 29: Ablauföffnungen
- 30: Lastaufnahmeadapter
- 31: Schnittstellenelement
- 32: Befestigungselement
- 33: Adapterplatte/ Abdeckplatte
- 34: Befestigungsprofil (vorzugsweise Sitzschienenprofil)
- 35: Aussparung
- 36: Kanalseitenwände
- 37: Bodenplatte
- 38, 38': Aufnahme (-flächen) für Fußbodenelemente-/ platten
- 39: Rückholfeder
- 40: Befestigungselement-/ bolzen
- 41: Seitliche Befestigungsmöglichkeit z.B. Gewindebohrun- gen
- 42: (Verschleiß-) Platte
- 43, 43': Dichtung/Dichtungsstreifen
- 44: Fußbodenplatte
- 45: Befestigungsmittel

## Patentansprüche

1. System zur Aufnahme von Zurrvorrichtungen für ein Frachttadesystem eines Transportmittels, insbesondere eines Flugzeuges, aufweisend zumindest einen Zurrpunktkanal (18), der Kanalseitenwände (36) und eine Bodenplatte (37) aufweist
zumindest eine Zurrvorrichtung (10) zum Verzurren oder Aufnehmen von Lasten oder Gütern, wobei die Zurrvorrichtung (10) einen Grundkörper (14) aufweist,
wobei der Zurrpunktkanal (18) eine Aufnahme für mehrere, in Abständen angeordnete Zurrvorrichtungen (10) und/oder Adapterplatten/ Abdeckplatten (33) und/oder Lastaufnahmeadapter (30) bildet und
wobei der Grundkörper (14) an seiner Unterseite Freifräsungen (21) zur Bildung einer brückenartigen Abflussöffnung aufweist.

2. System nach Anspruch 1, wobei die Aufnahme (23) am Grundkörper (14) als Aufnahmeöffnung ausgebildet ist, deren geometrische Grundform vorzugsweise rund, rechteckig oder quadratisch ist.

3. System nach einem der Ansprüche 1 bis 2, wobei der Grundkörper (14) in einen oberen und einen unteren Block (14A, 14B) teilbar ist, wobei zumindest in einem Block (14A, 14B) Toleranzausgleichmittel (190), wie Langlöcher oder vergrößerte Bohrungen vorgesehen sind.

4. System nach einem der Ansprüche 1 bis 3, wobei der Grundkörper (14) seitliche Befestigungsbohrungen (20) zur Verbindung mit den Kanalseitenwänden (36) aufweist.

5. System nach einem der Ansprüche 1 bis 4, wobei an den Kanalseitenwänden (36) Aufnahmen (38) zur Befestigung (45) von Fußbodenplatten (44) vorgesehen sind.

6. System nach einem der Ansprüche 1 bis 5, wobei im äußeren Bereich der Bodenplatte (37) des Zurrpunktkanals (18) Auflager bzw. Aufnahmen (38') zur Befestigung (45) von Fußbodenplatten (44) vorgesehen sind.

7. System nach einem der Ansprüche 1 bis 6, wobei der Zurrpunktkanal (18) im wesentlichen einen u-förmigen Querschnitt aufweist.

8. System nach einem der vorangegangenen Ansprüche, wobei die Befestigung des Zurrpunktkanals (18) an der Flugzeugstruktur (4) mit der Befestigung des Grundkörpers (14) der Zurrvorrichtung (10) gekoppelt ist.

9. System nach einem der Ansprüche 1 bis 8, wobei der Zurrpunktkanal als in mindestens eine Fußbodenplatte (180; 181) integrierter Zurrpunktkanal (180A, 180B; 181A, 181D) ausgebildet ist und Kanalseitenwände und Bodenplatte zumindest teilweise durch die mindestens eine Fußbodenplatte (180; 181) gebildet ist, wobei der mindestens eine integrierte Zurrpunktkanal (180A, 180B; 181A, 181D) die Aufnahme für mehrere, in Abständen angeordnete Zurrvorrichtungen (10) und/oder Adapterplatten/ Abdeckplatten (33) und/oder Lastaufnahmeadapter (30) bildet.

10. System nach Anspruch 9, wobei der integrierte Zurrpunktkanal (180A, 180B; 181A, 181D) in der Aufnahmeform mit der Form des Grundkörpers (14) der Zurrvorrichtung (10) korrespondiert.

11. System nach Anspruch 10, wobei der Grundkörper (14) der Zurrvorrichtung (10) über Befestigungsmittel (32) und Durchgangsbohrungen der Fußbodenplatte (180; 181) an der Flugzeugstruktur (4) fixiert ist.

12. System nach einem der Ansprüche 1 bis 8, wobei der Zurrpunktkanal gebildet wird aus mindestens zwei Bodenelementen (182; 182'), die jeweils im Randbereich integrierte Zurrpunktteilkanäle (182A, 182A'; 182B, 182B') aufweisen und jeweils ein Zurrpunktteilkanal (182A) eines ersten Bodenelementes (182) mit dem Zurrpunktteilkanal (182A') eines zweiten Bodenelementes (182') einen vollständigen Zurrpunktkanal bilden.

13. System nach Anspruch 12, wobei mittels des Grundkörpers (14) der Zurrvorrichtung (10) über Befestigungsmittel (32) gleichzeitig zwei Bodenelemente (182, 182') an der Flugzeugstruktur (4) fixierbar sind.

14. System nach einem der vorangegangenen Ansprüche, wobei mehrere hintereinander angeordnete Zurrpunktkanäle (18, 18'; 180A, 180B; 181A, 181 D; 182A, 182B) eine Drainageführung bilden.

## Claims

1. System for receiving lashing mechanisms for a cargo loading system of a means of transport, in particular an aircraft, comprising
at least one lashing point channel (18) comprising channel side walls (36) and a base plate (37),
at least one lashing mechanism (10) for lashing or receiving loads or goods, wherein the lashing mechanism (10) comprises a base body (14),
wherein the lashing point channel (18) forms a receiving means for a plurality of spaced apart lashing mechanisms (10) and/or adapter plates/cover plates (33) and/or load receiving adapters (30) and
wherein an underside of the base body (14) has cut-outs (21) for forming a bridge-like discharge outlet.

2. System according to claim 1, wherein the receiving means (23) at base body (14) is formed as a receiving opening having a basic geometric shape, preferably round, rectangular or quadratic.

3. System according to any one of claims 1 or 2, wherein the base body (14) is divisible into an upper and a lower block (14A, 14B), wherein at least one of the blocks (14A, 14B) is provided with a tolerance compensation means (190) such as slotted holes or enlarged boreholes.

4. System according to any one of claims 1-3, wherein the base body (14) has lateral fastening boreholes (20) for fastening to the side walls (36).

5. System according to any one of claims 1-4, wherein the channel side walls (36) have receiving means (38) for the fastening (45) of floor plates (44).

6. System according to any one of claims 1-5, wherein an outer region of base plate (37) of the lashing point channel (18) is provided with shoulders or receiving means (38') for the fastening (45) of floor plates (44).

7. System according to any one of claims 1-6, wherein the lashing point channel (18) has a substantially U-shaped cross-section.

8. System according to any one of the previous claims, wherein the fastening means for fastening the lashing point channel (18) to the aircraft structure (4) is coupled to the fastening means of the base body (14) of the lashing mechanism (10).

9. System according to any one of claims 1-8, wherein the lashing point channel is formed as a lashing point channel (180A, 180B; 181A, 181B) integrated into at least one floor plate (180; 181) and wherein the channel side walls and the base plate are at least partly formed by the floor plate (180; 181), wherein at least one of the integrated lashing point channels (180A, 180B; 181A, 181B) forms the receiving means for a plurality of spaced apart lashing mechanisms (10) and/or adapter plates/cover plates (33) and/or load receiving adapters (30).

10. System according to claim 9, wherein the integrated lashing point channel (180A, 180B; 181A, 181D) corresponds in form at the receiving means with the form of the base body (14) of the lashing mechanism (10).

11. System according to claim 10, wherein the base body (14) of the lashing mechanism (10) is fixed to the aircraft structure (4) by way of fastening means (32) and through-boreholes in the floor plates (180; 181).

12. System according to any one of claims 1-8, wherein the lashing point channel is formed from at least two floor elements (182; 182') each having in their respective edge region integrated lashing point channel parts (180A, 182A'; 182B, 182B') and any one of the lashing point channel parts (182A) of a first floor element (182) forms a complete lashing point channel with a lashing point channel part (182A') of a second floor element (182').

13. System according to claim 12, wherein, by means of the base body (14) of the lashing mechanism (10), floor elements (182, 182') are fixable two at a time to the aircraft structure (4) via the fastening means (32).

14. System according to any one of the previous claims, wherein a drainage is formed by a plurality of lashing point channels (18, 18'; 180A, 180B; 181A, 181D; 182A, 182B) arranged in series.

## Revendications

1. Système destiné à recevoir des dispositifs d'arrimage pour un système de chargement de fret d'un moyen de transport, en particulier d'un avion, comprenant au moins un conduit de points d'arrimage (18) qui présente des parois latérales de conduit (36) et une plaque de fond (37),
au moins un dispositif d'arrimage (10) destiné à arrimer ou à recevoir des charges ou des marchandises, le dispositif d'arrimage (10) présentant un corps de base (14),
le conduit de points d'arrimage (18) formant un logement pour plusieurs dispositifs d'arrimage (10) l'un de l'autre et/ou plaques adaptatrices/plaques de couverture (33) et/ou adaptateurs de réception des charges (30) disposés à distance l'un de l'autre et le corps de base (14) présentant sur son côté inférieur des dépouilles (21) pour former une ouverture d'évacuation en forme de pont.

2. Système suivant la revendication 1, dans lequel le logement (23) sur le corps de base (14) est réalisé sous forme d'ouverture de réception, dont la géométrie de base est de préférence ronde, rectangulaire ou carrée.

3. Système suivant l'une des revendications 1 à 2, dans lequel le corps de base (14) est partageable en un bloc supérieur et en un bloc inférieur (14A, 14B), des moyens de compensation de tolérances (190), tels que trous oblongs ou alésages agrandis, étant prévus au moins dans un bloc (14A, 14B).

4. Système suivant l'une des revendications 1 à 3, dans lequel le corps de base (14) présente des trous de fixation latéraux (20) pour l'assemblage avec les parois latérales de conduit (36).

5. Système suivant l'une des revendications 1 à 4, dans lequel des logements (38) pour la fixation (45) de panneaux de plancher (44) sont prévus sur les parois latérales de conduit (36).

6. Système suivant l'une des revendications 1 à 5, dans lequel des supports et/ou logements (38') pour la fixation (45) de panneaux de plancher (44) sont prévus dans la zone extérieure de la plaque de fond (37) du conduit de points d'arrimage (18).

7. Système suivant l'une des revendications 1 à 6, dans lequel le conduit de points d'arrimage (18) présente une section transversale essentiellement en U.

8. Système suivant l'une des revendications précédentes, dans lequel la fixation du conduit de points d'arrimage (18) sur la structure de l'avion (4) est couplée à la fixation du corps de base (14) du dispositif d'arrimage (10).

9. Système suivant l'une des revendications 1 à 8, dans lequel le conduit de points d'arrimage est réalisé sous forme de conduit de points d'arrimage (180A, 180B ; 181A, 181D) intégré dans au moins un panneau de plancher (180 ; 181) et les parois latérales de conduit et la plaque de fond sont formées au moins en partie par le au moins panneau de plancher (180 ; 181), le au moins un conduit de points d'arrimage intégré (180A, 180B ; 181A, 181D) formant le logement pour plusieurs dispositifs d'arrimage (10) l'un de l'autre et/ou plaques adapta-trices/plaques de couverture (33) et/ou adaptateurs de réception de charges (30) disposés à distance l'un de l'autre.

10. Système suivant la revendication 9, dans lequel le conduit de points d'arrimage intégré (180A, 180B ; 181A, 181D) correspond dans la forme de logement à la forme du corps de base (14) du dispositif d'arrimage (10).

11. Système suivant la revendication 10, dans lequel le corps de base (14) du dispositif d'arrimage (10) est fixé sur la structure de l'avion (4) par l'intermédiaire de moyens de fixation (32) et de trous de passage du panneau de plancher (180 ; 181).

12. Système suivant l'une des revendications 1 à 8, dans lequel le conduit de points d'arrimage est formé d'au moins deux éléments de fond (182 ; 182'), qui présentent respectivement des conduits partiels de points d'arrimage (182A, 182A' ; 182B, 182B') intégrés dans la zone de bordure et un conduit partiel de points d'arrimage (182A) d'un premier élément de fond (182) forme avec le conduit partiel de points d'arrimage (182A') d'un second élément de fond (182') un conduit de points d'arrimage complet.

13. Système suivant la revendication 12, dans lequel deux éléments de fond (182, 182') peuvent être fixés simultanément sur la structure de l'avion (4), par l'intermédiaire de moyens de fixation (32), au moyen du corps de base (14) du dispositif d'arrimage (10).

14. Système suivant l'une des revendications précédentes, dans lequel plusieurs conduits de points d'arrimage (18, 18' ; 180A, 180B ; 181A, 181D ; 182A, 182B), disposés les uns derrière les autres, forment une glissière de drainage.
